# EUROPÄISCHE PATENTSCHRIFT

(11) **EP 1 226 474 B1**
(45) Veröffentlichungstag und Bekanntmachung des Hinweises auf die Patenterteilung: **01.12.2004**
(21) Anmeldenummer: 00967658.6
(22) Anmeldetag: 11.09.2000
(51) Int. Cl.: G05B 19/042

(54) **VORRICHTUNG ZUR NETZAUSFALLERKENNUNG IN EINEM PROGRAMMGESTEUERTEN HAUSHALTGERÄT**
DEVICE FOR DETECTING A POWER FAILURE IN A PROGRAMME-CONTROLLED DOMESTIC APPLIANCE
DISPOSITIF DE DETECTION D'UNE COUPURE DE COURANT DANS UN APPAREIL DOMESTIQUE

(30) Priorität: 09.09.1999 DE 19943124
(43) Veröffentlichungstag der Anmeldung: 31.07.2002
(73) Patentinhaber: BSH Bosch und Siemens Hausgeräte GmbH, 81739 München (DE)
(72) Erfinder: KLEIN, Hans-Wilhelm, 97078 Würzburg (DE); UEBLER, Lothar, 91056 Erlangen (DE); WERKMANN, Horst, 85276 Pfaffenhofen (DE)
(86) Internationale Anmeldenummer: PCT/EP2000/008864
(87) Internationale Veröffentlichungsnummer: WO 2001/018618

(56) Entgegenhaltungen:
- EP-A- 0 027 432
- EP-A- 0 693 719
- US-A- 4 241 400
- US-A- 5 202 582
- PATENT ABSTRACTS OF JAPAN vol. 1996, no. 02, 29. Februar 1996 (1996-02-29) & JP 07 275561 A (TOSHIBA CORP), 24. Oktober 1995 (1995-10-24)

## Beschreibung

Die Erfindung bezieht sich auf eine Vorrichtung zur Netzausfallerkennung in einem über einen Netzschalter aus einem elektrischen Netz versorgten, programmgesteuerten und durch einen Bediener willkürlich auch während des Programmablaufs abschaltbaren Haushaltgerät mit einer elektronischen Programm-Steuervorrichtung und einem elektronischen Speicher zur Erfassung des Programmstatus, in dem bei Ausfall des Versorgungsnetzes der erreichte Programmstatus speicherbar ist, wobei in der Programm-Steuervorrichtung unterscheidbar ist, ob der Ausfall der elektrischen Größe des Haushaltgeräts auf einem Ausfall des Versorgungsnetzes oder auf einer willkürlichen Abschaltung des Haushaltgeräts beruht, und wobei durch die Programm-Steuervorrichtung nach Beendigung des Ausfalls des Versorgungsnetzes die Weiterführung des Programmablaufs ab dem erreichten Programmstatus veranlaßbar ist.

Eine derartige Vorrichtung ist aus der EP 0 027 432 A2 bekannt. Dort wird ein Schaltkreis beschrieben, mit dem sich in digitaler Form in einem elektronischen Datenspeicher Daten, die sich auf ein Betriebsprogramm eines Haushaltgeräts, insbesondere einer Waschmaschine, beziehen, speichern lassen, wobei in dem Haushaltgerät eine Programm-Steuervorrichtung integriert ist, die für das Abspeichern der Programmdaten in den Speicher zu bestimmten Zeitabständen während des Ablaufs des Betriebsprogramms sorgt. Die Programm-Steuervorrichtung ruft diese Daten auf, wenn nach einem beabsichtigten oder zufälligen Abbruch der Versorgungsspannung diese wieder hergestellt ist.

Das bekannte Haushaltgerät weist einen Ein-/Aus-Schalter auf, über den das Gerät mit dem elektrischen Netz verbunden ist. Die Programm-Steuervorrichtung empfängt Eingangssignale und erzeugt Ausgangssignale. Sie ist außerdem mit einem elektronischen Speicher verbunden, in dem Daten in digitaler Form auch bei einem Netzausfall noch abgespeichert werden können. In dem Haushaltgerät ist nämlich eine Batterie vorgesehen, durch die im Fall eines Netzausfalls die Programm-Steuereinheit und der Datenspeicher mit Energie versorgt werden können. In Fall des Wiedereinsetzens der Netzspannung nach einem Netzausfall startet die Programm-Steuervorrichtung nach einem Reset-Zyklus das Programmzählwerk wieder bei einem Nullwert und setzt dann, sofern die im Speicher gespeicherten Daten korrekt sind, das abzuarbeitende Betriebsprogramm ungefähr dort fort, wo es abgebrochen worden war. Wenn jedoch das Haushaltgerät durch den Bediener ausgeschaltet wurde, steht nach dem Abbruch der Spannung keine Ersatzspannungsversorgung durch die Batterie zur Verfügung, so daß der Speicher seine Daten verliert.

Aus der US 5 202 582 und der US 4 241 400 sind elektrische Schaltkreise für wasserführende Haushaltsgeräte bekannt, in denen ein Türschalter enthalten ist. Wenn die Tür geöffnet ist, werden alle elektrischen Verbraucher ausgeschaltet.

Es ist die Aufgabe der Erfindung, eine gattungsgemäße Vorrichtung zur Netzausfallerkennung zu schaffen, bei der der Schaltungsaufwand innerhalb des Haushaltgeräts gegenüber einem bekannten Haushaltgerät verringert ist.

Diese Aufgabe wird erfindungsgemäß dadurch gelöst, daß ein erstes dem Netzschalter auf der Seite des Versorgungsnetzes vorgelagertes und ein zweites dem Netzschalter geräteseitig nachgelagertes Mittel zum Erkennen einer elektrischen Größe des Versorgungsnetzes bzw. des Netzes in dem Haushaltgerät vorhanden sind und daß durch einen Vergleich der jeweils von den Mitteln aus den elektrischen Größen erzeugten Signale in der Programm-Steuervorrichtung unterscheidbar ist, ob der Ausfall oder die Veränderung der elektrischen Größe des Haushaltgeräts auf einen Ausfall des Versorgungsnetzes oder auf einer willkürlichen Abschaltung des Haushaltgeräts beruht.

Durch diese Mittel ist es möglich, zwischen der Netzwiederkehr nach einem zufälligen Netzausfall und dem Wiedereinschalten mit dem Netzschalter nach einem vorherigen gewollten Abschalten mit dem Netzschalter zu unterscheiden. Das Unterscheidungsmerkmal ist dabei, daß im zweiten Fall vor dem Netzschalter noch die Netzspannung ansteht. Deshalb ist sowohl das Vorhandensein der Netzspannung direkt am Netzanschluß des Haushaltgerätes, also vor dem Netzschalter, als auch nach diesem zu überprüfen. Diese Meßgrößen werden in einem Teil der Programm-Steuervorrichtung erfaßt und ausgewertet. Erfindungsgemäß wird somit eine Lösung geschaffen, die gegenüber dem Stand der Technik kostengünstiger und platzsparender ist und ohne aufwendige Schaltmechanik auskommt.

Es versteht sich, daß unter einem Mittel zum Erkennen einer elektrischen Größe im Sinne der Erfindung auch ein Mittel zum Erkennen eines Magnetfeldes verstanden wird, das sich infolge des Fließens eines elektrischen Stroms einstellt.

Vorteilhafte Weiterbildungen der Erfindung ergeben sich aus dem Unteransprüchen.

In einer besonders vorteilhaften Ausbildung der Erfindung ist das auf der Seite des Versorgungsnetzes gelagerte Mittel zum Erkennen der Versorgungsspannung vom Potential der Netzspannung, d.h. galvanisch, getrennt. Beispielsweise wird eine Schaltung mit mindestens einem Optokoppler vorgesehen, wobei diese Schaltung eingangsseitig mindestens eine Sendediode und ausgangsseitig mindestens eine Empfangsdiode oder einen Phototransistor aufweist. Deren Signal wird anschließend verstärkt und der Programm-Steuereinheit zugeführt.

Bevorzugt wird der Strom der Sendediode des Optokopplers durch einen Netzkondensator oder einen Leistungsvorwiderstand begrenzt. Als Netzkondensator eignet sich auch ein Kondensator eines Funkentstörfilters. Alternativ zur Verwendung eines Optokopplers läßt sich auch ein Relais oder ein Überträger einsetzen. Das Ausgangssignal der Empfangsdiode oder des Phototransistors wird durch einen Pegelwandler, vorzugsweise einen Schmitt-Trigger, digitalisiert.

Die von dem Mittel zum Erkennen des Vorhandenseins einer geräteinternen Spannung ist vorzugsweise die von einem geräteinternen Netzteil erzeugte Spannung.

In einer besonders bevorzugten Ausführungsform der Erfindung enthält die Programm-Steuervorrichtung einen Mikrocontroller, der mit beiden Mitteln zur Erkennung der Spannungen verbunden ist. Vorzugsweise ist der Mikrocontroller durch ein in dem Haushaltgerät vorhandenes Netzteil rücksetzbar. Der Mikrocontroller hat Eingänge für die Abfrage von Bedienelementen und Sensoren sowie Ausgänge für die Steuerung von Aktuatoren und Bedienanzeigen. Der Mikrocontroller weist vorzugsweise einen nichtflüchtigen Speicher, insbesondere ein EEPROM, auf.

Vorzugsweise werden bei der Abarbeitung eines Betriebsprogramms die den jeweils erreichten Programmstatus wiedergebenden Daten zyklisch in dem Speicher abgespeichert.

In einer besonders vorteilhaften Ausführungsform der Erfindung ist außerdem vorgesehen, daß eine durch einen Unterbrechungsschalter, beispielsweise einen Türschalter, durch den Benutzer vorgenommene Unterbrechung, beispielsweise beim Nachlegen eines Wäschestücks in den Waschgang einer Waschmaschine, der Ablauf des Programms nach Beendigung der Unterbrechung fortgesetzt werden kann.

Nachstehend wird die Erfindung in einem Ausführungsbeispiel anhand der Zeichnungen näher erläutert. Es zeigen:
- Fig. 1: den Aufbau des geräteinternen Netzes in einem programmgesteuerten Haushaltgerät,
- Fig. 2: ein Flußdiagramm zur Unterscheidung zwischen einer zufälligen Netzunterbrechung und einem willkürlichen Abbruch eines Betriebsprogramms,
- Fig. 3: eine weitere Ausführungsform des geräteinternen Netzes,
- Fig. 4: ein weiteres Flußdiagramm unter Einschluß der Funktion "Programmunterbrechung" und
- Fig. 5: eine dritte Ausführungsform des geräteinternen Netzes

Ein Haushaltgerät ist über einen Netzeingang 1 an ein elektrisches Versorgungsnetz angeschlossen. Zwischen dem Netzeingang 1 und einem ihm nachgeordneten Netzschalter 2 ist zwischen den Polen des Netzeingangs 1 ein Kondensator 3 geschaltet, der als Entstörkondesator eines Funkentstörfilters dient. Der Kondensator 3 kann gleichzeitig zur Strombegrenzung für die Sendediode eines Optokopplers 4 in einer Optokopplerschaltung dienen, wobei die Sendediode als Mittel zur potentialgetrennten Erfassung der Netzspannung dient. Vorzugsweise wird eine Optokopplerschaltung, bestehend aus mehreren Optokopplern, verwendet, um beide Halbwellen der Netzspannung erfassen zu können. Der Strom der Sendediode des Optokopplers 4 wird über einen Leistungsvorwiderstand oder einen Netzkondensator begrenzt, wie ihn der Kondensator 3 darstellt. Ausgangsseitig besitzt der Optokoppler 4 einen Phototransistor, der bei vorhandener Netzspannung durchgeschaltet ist. Anstelle des Phototransistors läßt sich ebenfalls eine Photodiode einsetzen.

Das Signal aus dem Optokoppler 4 wird als Digitalsignal einer Programm-Steuervorrichtung 5 zugeführt. Diese weist als einen programmgesteuerten Baustein einen Mikrocontroller 6 auf. Dieser hat einen Reset-Eingang 6.1, der bei durch das Netzteil 9 erkannter Netzunterspannung oder bei Ausfall der Netzspannung ein Signal erhält, einen Eingang 6.2 für die Erfassung der Netzspannung nach dem Netzschalter 2, d. h. der geräteinternen Spannung, und einen Eingang 6.3 für die Erkennung eines Netzausfalls vor dem Netzschalter 2. Dabei wird das dem Eingang 6.2 zugeführte Signal in einer Vorrichtung 7 zur Signalaufbereitung aus dem internen Netzspannungssignal gewonnen, wobei die Einrichtung 7 beispielsweise ein Pegelwandler ist. Mit dem Pegelwandler wird bei vorhandener Netzwechselspannung eine kleine Gleichspannung erzeugt, die von dem Eingang 6.2 detektierbar ist. In entsprechender Weise wird das von dem Optokoppler 4 als Vorrichtung zur Potentialtrennung erzeugte Ausgangssignal einer Einrichtung 8 zur Signalaufbereitung zugeführt, die vorzugsweise ebenfalls ein Pegelwandler ist oder einen solchen umfaßt. Die Einrichtung 8 ist mit dem Eingang 6.3 verbunden. Im Gegensatz zu der Einrichtung 7 muß die Einrichtung 8 die beschriebene Potentialtrennung aufweisen, um mit dem Netzschalter 2 das Haushaltgerät allpolig Spannungs- und potentialfrei abschalten zu können.

Der Mikrocontroller 6 weist zusätzlich einen Speicher 6.4, insbesondere einen nichtflüchtigen Speicher, beispielsweise ein EEPROM, auf. Dieser speichert die Zustände der zur Anwahl und Abarbeitung der Spül- oder Waschprogramme notwendigen Eingänge 6.5, die mit Bedienelementen 21 und Sensoren 22 verbunden sind, sowie von Ausgängen 6.6 für die Steuerung von Aktuatoren 23 und Bedienanzeigen 24 ab. Die Aktuatoren 23 sind in einem Wäschepflegegerät beispielsweise ein Triac zur Steuerung des Motors, eine Widerstandsheizung, Elektroventile usw.

Je nach Forderung der Wiederaufsetzgenauigkeit nach einem Netzausfall werden die Daten des Erreichten Programmstatus zyklisch oder nach dem Erkennen eines Netzausfalls in den nichtflüchtigen Speicher 6.4 geschrieben.

Für diesen Fall besitzt ein Netzteil 9 einen genügend großen Energiespeicher 11, der über eine Versorgungsleitung 110 mit dem Mikrocontroller 6 verbunden ist. Durch diesen wird der Mikrocontroller 6 nach einem Netzausfall solange sicher gespeist, bis die Datensicherung, d.h. die Abspeicherung des erreichten Programmstatus und weiterer Daten, abgeschlossen ist und im Mikrocontroller 6 über ein Resetsignal das Beenden des Programmes ausgelöst wird. Das Resetsignal erfolgt über die Signalleitung 10, z.B. kurz bevor die Versorgungsspannung an dem Mikrocontroller 6 auf den Wert abgefallen ist, bei dem kein einwandfreier Betrieb des Mikrocontrollers 6 mehr möglich ist.

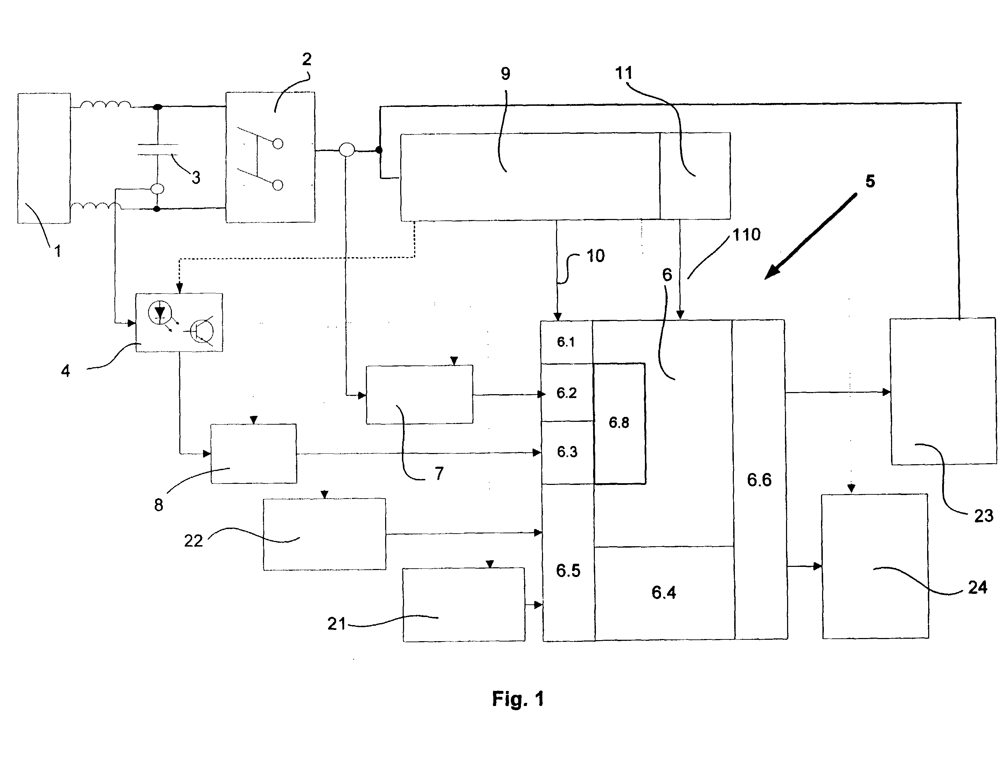

In den Abbildungen 1, 3, 5 sind die nicht bezeichneten Verbindungsleitungen zwischen den einzelnen Funktionseinheiten und dem Netzteil 9, die der Logikversorgung dienen, punktiert dargestellt.In einer vorteilhaften Ausgestaltung wird nach dem Feststellen des Fehlens der Netzspannung mittels der Einrichtung 7 und über den Eingang 6.2 des Mikrocontrollers 6 eine Abfrage des Optokopplers 4, der Einrichtung 8 und des Eingangs 6.3 ausgelöst, die feststellen soll, ob die Netzspannung bereits vor dem Netzschalter 2 fehlt.

Sofern an dem Eingang 6.2 (Fig. 1) keine Spannung anliegt, wird der Eingang 6.3 abgefragt. Wenn an dem Eingang 6.3 die Netzspannung anliegt (Zustand "1"), stellt eine Auswertungsschaltung 6.8 (Fig. 1) zur Auswertung durch die Software innerhalb des Mikrocontrollers 6 fest, daß das Programm des Haushaltgeräts nach dem Wiedereinschalten des Haushaltgeräts erneut gestartet werden soll.

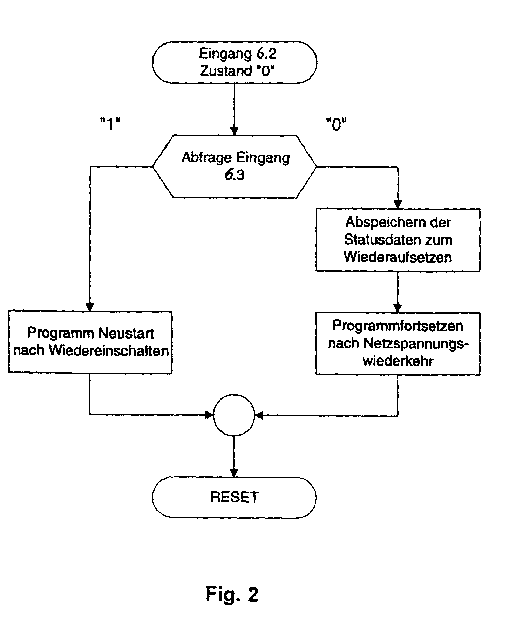

Wenn jedoch sowohl die Netzspannung an dem Eingang 6.3 als auch die Versorgungsspannung innerhalb des Haushaltgeräts an dem Eingang 6.2 fehlen (Zustand "0"), wird der erreichte Programmstatus in dem Speicher 6.4 bis zum Wiedereinsetzen nach dem Netzspannungsausfall abgespeichert, so daß das Haushaltgerät das Programm dann fortsetzt. In diesem Fall wird zusätzlich eine Information, z.B. das Setzen eines Programmfortsetzungs-Flags, gespeichert, die den Mikrocontroller 6 nach der Wiederkehr der Netzspannung veranlaßt, mit den Programmstatusdaten den Programmablauf fortzusetzen (Fig.2 ). Der in Fig.2 mittels eines Flußdiagramms dargestellte Abschnitt des Auswerteprogramms, als Unterspannungsroutine bezeichnet, wird dann ausgelöst, wenn mittels Einrichtung 7 der Ausfall der Netzspannung festgestellt wurde.

Wenn das Haushaltgerät willkürlich durch den Bediener durch Betätigung des Netzschalters 2 abgeschaltet wird, wird an dem Eingang 6.2 das Fehlen der Netzspannung erkannt. Da an dem Eingang 6.3 die Spannung noch vorhanden ist, wird der Programmstatus nicht gespeichert. Es wird jedoch die Information gespeichert, daß das Programm bei Wiederkehr der Netzspannung neu beginnen soll oder ein anderes Programm ablaufen soll. Dies geschieht z.B. durch Rücksetzen des Programmfortsetzungs-Flags. Nach Wiederkehr der Netzspannung durch Wiedereinschalten mittels des Netzschalters 2 erfolgt der Ablauf entsprechend der Abfrage der vorstehend genannten Information mit einem Neustart des Programms, d.h. des Spül- oder Waschprogramms, und der Neuauswahl des Programmablaufs durch den Bediener.

Wenn der Programmstatus zyklisch in dem Speicher 6.4 abgespeichert wird, reduziert sich dieser Ablauf auf das Setzen oder Rücksetzen des jeweiligen den erreichten Programmstatus anzeigenden Flags und die Abfrage dieser Information bei jedem Neustart des Programms nach Netzwiederkehr.

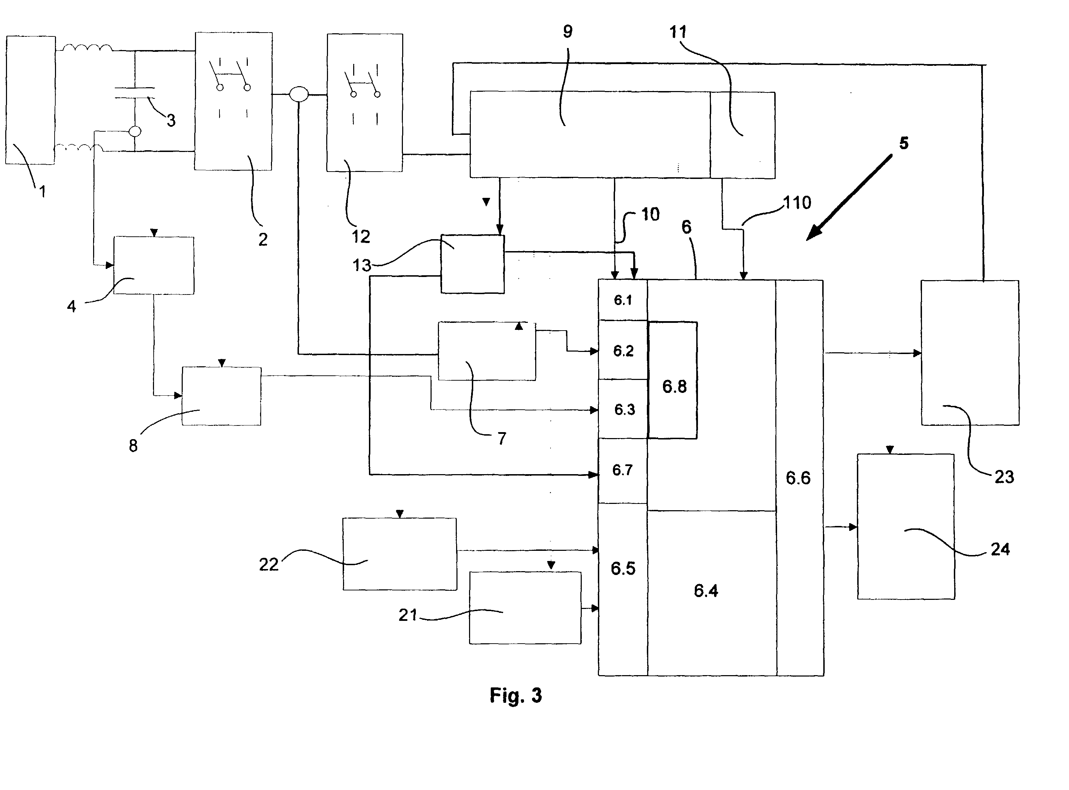

Die Einrichtung 7 ist entweder ausgelegt für die Detektion von niedrigen Spannungen - in diesem Fall ist sie, wie in Fig. 3 dargestellt ist, an das Netzteil 9 angeschlossen, das eine derartige niedrige Spannung erzeugt -, oder sie erkennt die Netzspannung innerhalb des Haushaltgeräts, indem sie unmittelbar hinter dem Netzschalter 2 an das geräteinterne Netz angeschlossen ist.

In einer vorteilhaften Ausbildungsform weist ein mit der Programm-Steuervorrichtung 5 ausgerüstetes programmierbares Haushaltgerät, beispielsweise eine Waschmaschine oder Geschirrspüler, einen Unterbrechungsschalter, insbesondere in der Form eines Türschalters 12 (Fig. 3), auf. Bei einem Geschirrspüler gestattet der Türschalter 12 die Unterbrechung des Spülvorgangs, wenn durch Betätigung des Türschalters die Tür zum Spülraum geöffnet wird. Auf diese Weise läßt sich auch während des Ablaufs eines Spülprogramms zusätzliches Geschirr in den Spülraum einbringen. Mittels des Türschalters 12 werden je nach Ausführung des Haushaltgeräts entweder nur die Aktuatoren 23 oder auch andere elektronische Bauelemente abgeschaltet. Damit ergibt sich die Forderung, auch bei Abschaltung der elektronischen Bauelemente durch den Türschalter 12 das Betriebsprogramm nach dem Schließen der Tür fortzusetzen. Zur Unterscheidung zwischen der Unterbrechung durch den Netzschalter 2 und den Türschalter 12 muß der Mikrocontroller 6 eine weitere Abfrage der Netzspannung durchführen. Hierzu wird eine dem Türschalter 12 (oder einem anderen Unterbrechungsschalter) nachgeordnete Einrichtung 13 vorgesehen, die eingangsseitig entweder die geschaltete Netzspannung detektiert, indem sie unmittelbar hinter dem Türschalter 12 angeschlossen ist, oder eine von dem Netzteil 9 gelieferte niedrige Spannung detektiert, die in Abhängigkeit von der Stellung des Türschalters 12 geschaltet ist und über die Signalleitung 120 der Einrichtung 13 zugeführt wird, wie in Fig. 3 dargestellt ist und die ausgangsseitig über einen Eingang 6.7 mit dem Mikrocontroller 6 verbunden ist.

Für den Fall, daß der Türschalter 12 mit der von dem Netzteil 9 erzeugten Spannung versorgt wird , läßt sich die Einrichtung 13 ebenfallsin der oben beschriebenen Weise einsetzen, vorausgesetzt, daß sie hinter dem Türschalter 12 angeordnet ist. Sofern der Türschalter 12 vorhanden ist, ist die Einrichtung 7 vor diesem und hinter dem Netzschalter 2 angeschlossen, damit sie in jedem Fall das Anliegen oder Nicht-Anliegen der geräteinternen Spannung erfaßt.

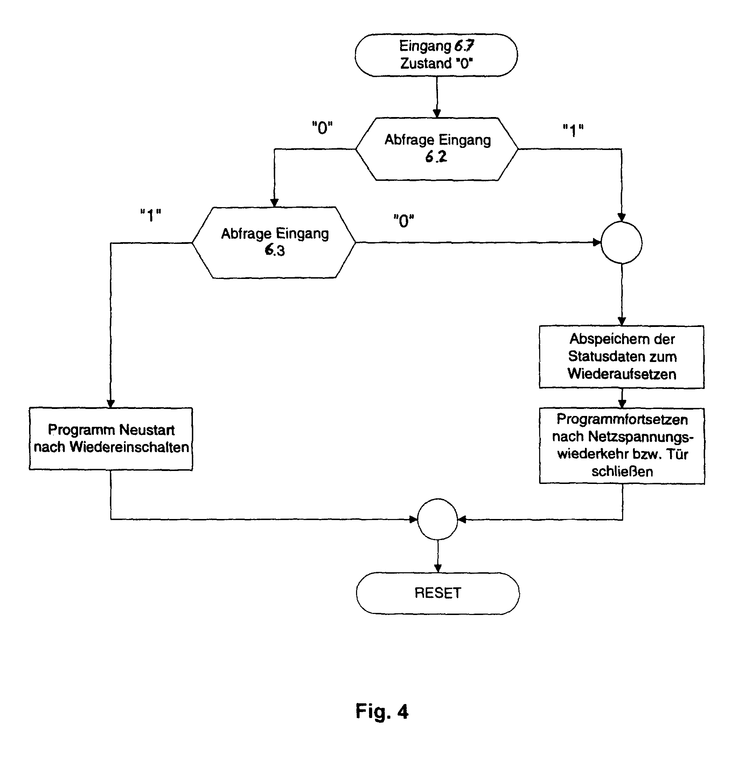

Wenn, wie in Fig. 4 anhand eines Flußdiagramms dargestellt, bei Vorhandensein des Türschalters 12 oder eines anderen entsprechenden Unterbrechungsschalters an dem zu der Einrichtung 13 zugehörigen Eingang 6.7 der Spannungszustand "0" festgestellt wird, wird von dem Mikrocontroller der Eingang 6.2 abgefragt, ob an diesem eine Spannung anliegt. Wenn dies der Fall ist, was gleichzeitig bedeutet, daß auch die Netzspannung an dem Eingang 6.3 anliegt, wird der Programmstatus, der gerade erreicht worden ist zum Wiederaufsetzen des Programms nach dem Schließen der Tür, d.h. nach Beendigung dieser Unterbrechung, abgefragt.

Wenn an dem Eingang 6.7 das Signal "0" anliegt, während gleichzeitig auch an dem Eingang 6.2 das Signal "0" anliegt, was bedeutet, daß die geräteinterne Versorgungsspannung ausgeschaltet ist und daß zusätzlich die Versorgungsspannung durch den Türschalter 12 unterbrochen worden ist, wird, sofern an dem Eingang 6.3 die Netzspannung anliegt (Zustand "1"), durch den Mikrocontroller 6 veranlaßt, daß beim Wiedereinschalten des Haushaltgeräts ein Betriebsprogramm oder dasselbe Betriebsprogramm erneut gestartet wird.

Wenn andererseits nach Unterbrechung des Programmablaufs durch Betätigung des Türschalters 11 an keinem der Eingänge 6.7, 6.2 und 6.3 ein Spannungssignal anliegt, d.h. sowohl die Versorgungsspannung als auch die Netzspannung die Größe 0 haben, wird der Programmstatus, der erreicht worden ist, abgespeichert, damit das Programm nach dem Wiedereinsetzen der Netzspannung und nach dem Schließen der Tür durch den Türschalter 12 oder nach Beendigung der Unterbrechung durch den Netzschalter 2 fortgesetzt wird.

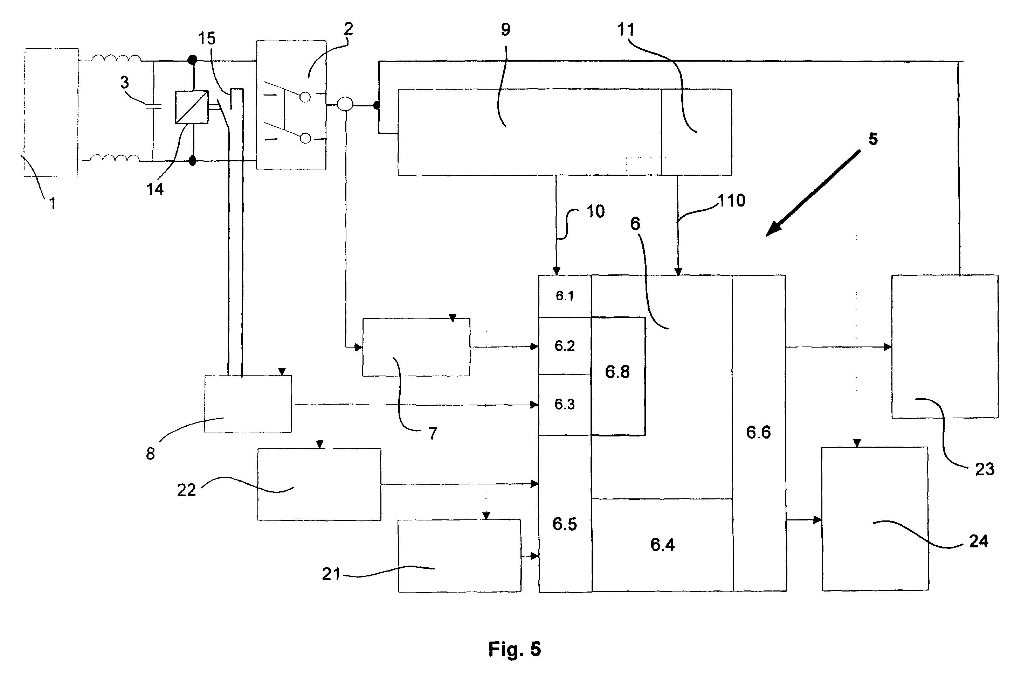

In einem anderen Ausführungsbeispiel der Erfindung (Fig. 5) ist anstelle des Optokopplers 4 ein Relais 14 vorgesehen, das in dem Bereich zwischen dem Netzeingang 1 und dem Netzschalter 2 angeordnet ist und, sofern der Funktentstörkondensator 3 vorhanden ist, parallel zu diesem geschaltet ist. Das Relais 14 hat den Vorteil, daß sich die Signalaufbereitung von der Netzspannungserfassung zu dem Mikrocontroller 6 hin einfacher und kostengünstiger ausführen läßt. Das Relais 14 ist für eine Erregung mit der Netzwechselspannung ausgelegt und bietet die notwendige Potentialtrennung zwischen dem Erregerkreis (Netzspannung) und dem Kontaktkreis (Verbindung zu dem Mikrocontroller 6). Wenn der Arbeitskontakt 15 des Relais 14 bei Vorhandensein der Netzspannung vor dem Netzschalter 2 geschlossen ist, erfaßt der Mikrocontroller 6 über den Eingang 6.3 das Vorhandensein der Netzspannung. Bei Netzausfall fällt das Relais 14 ab. Die entsprechende Auswertung in der Software-Auswerteschaltung 6.8 innerhalb des Mikrocontrollers 6 erfolgt, wie anhand von Fig.3 und Fig. 5 dargestellt ist. Bei Verwendung des Relais 14 anstelle des Optokopplers 4 ist zu beachten, daß die Relaisabfallzeit kleiner als die Abfragedauer der Programm-Steuervorrichtung 5 ist.

Anstelle der Erfassung elektrischer Größen wie der Netzspannung zwischen dem Netzeingang 1 und dem Netzschalter 2 lassen sich auch magnetische Größen, z. B. die magnetische Induktion, erfassen und als Eingangsgrößen dem Mikrocontroller 6 zuführen.

## Patentansprüche

1. Vorrichtung zur Netzausfallerkennnung in einem über einen Netzschalter (2) aus einem äußeren elektrischen Netz versorgten, programmgesteuerten und durch einen Bediener willkürlich auch während des Programmablaufs abschaltbaren Haushaltgerät mit einer elektronischen Programm-Steuervorrichtung (5) und einem Speicher zur Erfassung des Programmstatus, in dem bei Ausfall des Versorgungsnetzes der erreichte Programmstatus speicherbar ist, wobei in der Programm-Steuervorrichtung (5) unterscheidbar ist, ob der Ausfall der elektrischen Größe des Haushaltgeräts auf einem Ausfall des Versorgungsnetzes oder auf einer willkürlichen Abschaltung des Haushaltgeräts beruht, und wobei durch die Programm-Steuervorrichtung (5) nach Beendigung des Ausfalls des Versorgungsnetzes die Weiterführung des Programmablaufs ab dem erreichten Programmstatus veranlaßbar ist, **dadurch gekennzeichnet, daß** ein erstes, dem Netzschalter (2) auf der Seite des äußeren Netzes vorgelagertes (3, 4, 8; 14, 15) und ein zweites, dem Netzschalter (2) geräteseitig nachgelagertes Mittel (7) zum Erkennen einer elektrischen Größe des Versorgungsnetzes bzw. des Netzes in dem Haushaltgerät vorhanden sind und daß durch einen Vergleich der jeweils von den Mitteln aus den elektrischen Größen erzeugten Signale in der Programm-Steuervorrichtung (5) unterscheidbar ist, ob der Ausfall oder die Veränderung der elektrischen Größe des Haushaltgeräts auf einem Ausfall des äußeren Netzes oder auf einer willkürlichen Abschaltung des Haushaltgeräts beruht.

2. Vorrichtung nach Anspruch 1, **dadurch gekennzeichnet, daß** das erste Mittel (3, 4, 8; 14, 15) vom Potential der Netzspannung getrennt ist.

3. Vorrichtung nach Anspruch 2, **dadurch gekennzeichnet, daß** das erste Mittel (3, 4, 8; 14, 15) eine Schaltung mit mindestens einem Optokoppler (4) umfaßt, wobei die Schaltung eingangsseitig eine Sendediode und ausgangsseitig eine Empfangsdiode oder einen Phototransistor aufweist.

4. Vorrichtung nach Anspruch 3, **dadurch gekennzeichnet, daß** der Strom der Sendediode des Optokopplers (4) durch einen Netzkondensator (3) oder einen Leistungsvorwiderstand begrenzbar ist.

5. Vorrichtung nach Anspruch 4, **dadurch gekennzeichnet, daß** der Netzkondensator (3) ein Kondensator eines Funkentstörfilters ist.

6. Vorrichtung nach Anspruch 2, **dadurch gekennzeichnet, daß** das erste Mittel (3, 4, 8; 14, 15) ein Relais (14) oder einen Übertrager umfaßt.

7. Vorrichtung nach einem der Ansprüche 3 bis 5, **dadurch gekennzeichnet, daß** das Ausgangssignal der Empfangsdiode oder des Phototransistors durch einen Pegel-Wandler, insbesondere durch einen Schmitt-Trigger, digitalisierbar ist.

8. Vorrichtung nach einem der Ansprüche 1 bis 7, **dadurch gekennzeichnet, daß** die durch das zweite Mittel (7) erkennbare Spannung die von einem geräteinternen Netzteil (9) erzeugte Spannung ist.

9. Vorrichtung nach einem der Ansprüche 1 bis 8, **dadurch gekennzeichnet, daß** die Programm-Steuervorrichtung (5) einen Mikrocontroller (6) enthält, der mit dem ersten (3, 4, 8; 14, 15) und dem zweiten Mittel (7) verbunden ist.

10. Vorrichtung nach Anspruch 9, **dadurch gekennzeichnet, daß** der Mikrocontroller (6) durch das Netzteil (9) rücksetzbar ist.

11. Vorrichtung nach Anspruch 9 oder 10, **dadurch gekennzeichnet, daß** der Mikrocontroller (6) Eingänge (6.5) für die Abfrage von Bedienelementen (21) und Sensoren (22) aufweist.

12. Vorrichtung nach einem der Ansprüche 9 bis 11, **dadurch gekennzeichnet, daß** der Mikrocontroller (6) Ausgänge für die Steuerung von Aktuatoren (23) und Bedienanzeigen (24) aufweist.

13. Vorrichtung nach einem der Ansprüche 9 bis 12, **dadurch gekennzeichnet, daß** der Mikrocontroller (6) einen nichtflüchtigen Speicher (6.4), insbesondere ein EEPROM, enthält.

14. Vorrichtung nach Anspruch 13, **dadurch gekennzeichnet, daß** die Daten eines bei Abarbeitung eines Programms erreichten Programmstatus in dem Speicher (6.4) zyklisch abspeicherbar sind.

15. Vorrichtung nach Anspruch 14, **dadurch gekennzeichnet, daß** ein Energiespeicher zur elektrischen Versorgung des Mikrocontrollers (6) nach einem Netzausfall vorhanden ist und daß die Daten eines bei Abarbeitung eines Programms erreichten Programmstatus in dem Speicher (6.4) nach Erkennung eines Netzausfalls abspeicherbar sind.

16. Vorrichtung nach einem der Ansprüche 1 bis 15, **dadurch gekennzeichnet, daß** ein drittes, einem Unterbrechungsschalter (12) zugeordnetes Mittel (13) zum Erkennen einer willkürlichen Programmunterbrechung vorhanden ist und daß durch die Programm-Steuervorrichtung.(5) aufgrund eines von dem dritten Mittel (13) erzeugten Signals unterscheidbar ist, ob der Ausfall oder die Veränderung der elektrischen Größe des Haushaltgeräts auf einem Ausfall des Versorgungsnetzes, auf einer willkürlichen Abschaltung oder einer willkürlichen Programmunterbrechung beruht, daß in dem Speicher (6.4) der bei der Programmunterbrechung erreichte Programmstatus speicherbar ist und daß durch die Programm-Steuervorrichtung (5) nach Beendigung der Programmunterbrechung die Weiterführung des Programmablaufs ab dem erreichten Programmstatus veranlaßbar ist.

## Claims

1. Device for mains failure recognition in a program-controlled domestic appliance, which is supplied from an external electrical mains and which can be arbitrarily switched off by a user even during the course of the program, with an electronic program control device (6) and a memory for detection of the program status, in which the attained program status can be stored in the case of failure of the supply mains, wherein distinction can be made in the program control device (5) whether the failure of the electrical magnitude of the domestic appliance is based on a failure of the supply mains or a discretionary switching off of the domestic appliance and wherein after conclusion of the failure of the supply mains the further conduct of the program course from the obtained program status is arranged by the program control device (5), **characterised in that** a first means (3, 4, 8; 14, 15) upstream of the mains switch (2) at the side of the external mains and a second means (7) downstream of the mains switch (2) at the appliance side for recognition of an electrical magnitude of the supply mains or the mains in the domestic appliance are present and that through a comparison of the signals respectively produced by the means from the electrical magnitudes distinction can be made in the program control device (5) whether the failure of or change in the electrical magnitude of the domestic appliance is based on a failure of the external mains or on a discretionary switching off of the domestic appliance.

2. Device according to claim 1, **characterised in that** the first means (3, 4, 8; 14, 15) is separated from the potential of the mains voltage.

3. Device according to claim 2, **characterised in that** the first means (3, 4, 8; 14, 15) comprises a circuit with at least one optical coupler (4), wherein the switch has a transmitter diode at the input side and a receiver or a phototransistor at the output side.

4. Device according to claim 3, **characterised in that** the current of the transmitter diode of the optical coupler (4) can be limited by a mains capacitor (3) or a protective resistor.

5. Device according to claim 4, **characterised in that** the mains capacitor (3) is a capacitor of a radio interference suppression filter.

6. Device according to claim 2, **characterised in that** the first means (3, 4, 8; 14, 15) comprises a relay (14) or a transformer.

7. Device according to one of claims 3 to 5, **characterised in that** the output signal of the receiver diode or of the photo transistor can be digitalised by a level transducer, particularly by a Schmitt trigger.

8. Device according to one of claims 1 to 7, **characterised in that** the voltage recognisable by the second means (7) is the voltage produced by a mains part (9) internally of the appliance.

9. Device according to one of claims 1 to 8, **characterised in that** the program control device (5) comprises a microcontroller (6) which is connected with the first means (3, 4, 8; 14, 15) and the second means (7).

10. Device according to claim 9, **characterised in that** the microcontroller (6) is resettable by the mains part (9).

11. Device according to claim 9 or 10, **characterised in that** the microcontroller (6) has inputs (6.5) for interrogation of control elements (21) and sensors (22).

12. Device according to one of claims 9 to 11, **characterised in that** the microcontroller (6) has outputs for control of actuators (23) and control displays (24).

13. Device according to one of claims 9 to 12, **characterised in that** the microcontroller (6) comprises a non-volatile memory (6.4), particularly an EEPROM.

14. Device according to claim 13, **characterised in that** the data of a program status attained during working down a program can be cyclically stored in the memory (6.4).

15. Device according to claim 14, **characterised in that** an energy store for electrical supply of the microcontroller (6) after a mains failure is present and that the data of a program status attained during working down a program can be stored in the memory (6.4) after recognition of a mains failure.

16. Device according to one of claims 1 to 15, **characterised in that** a third means (13), which is associated with an interrupter switch (12), for recognition of an arbitrary program interruption is present and that distinction can be made by the program control device (5) on the basis of a signal produced by the third means (13) whether the failure of or change in the electrical magnitude of the domestic appliance is based on a failure of the supply voltage, on a discretionary switching off or on a discretionary program interruption, that the program status attained at the time of the program interruption can be stored in the memory (6.4) and that further conduct of the program course from the attained program status can be arranged by the program control device (5) after conclusion of the program interruption.

## Revendications

1. Dispositif pour la détection de défaillance de réseau dans un appareil ménager alimenté par un interrupteur de réseau (2) à partir d'un réseau électrique extérieur, commandé par programme et pouvant être mise hors service volontairement par un utilisateur également pendant le déroulement de programme, équipé d'un dispositif électronique de commande de programme (5) et d'une mémoire pour la saisie de l'état de programme dans laquelle l'état de programme atteint peut être mémorisé en cas de défaillance du réseau d'alimentation, moyennant quoi on peut différencier dans le dispositif de commande le programme (5) si la défaillance de la grandeur électrique de l'appareil ménager est due à une défaillance du réseau d'alimentation ou à une mise hors service volontaire de l'appareil ménager, et moyennant quoi la poursuite du déroulement de programme à partir de l'état de programme atteint peut être demandée par le dispositif de commande de programme (5) après la fin de la défaillance du réseau d'alimentation, **caractérisé en ce qu'**un premier moyen (7) placé en amont de l'interrupteur de réseau (2) du coté du réseau extérieur (3, 4, 8 ; 14, 15) et un second moyen (7) placé en aval de l'interrupteur de réseau (2) côté appareil sont présents pour la détection d'une grandeur électrique du réseau d'alimentation ou du réseau dans l'appareil ménager et **en ce qu'**une comparaison des signaux générés respectivement par les moyens à partir des grandeurs électriques dans le dispositif de commande de programme (5) permet de différencier si la défaillance ou la variation de la grandeur électrique de l'appareil ménager est due à une défaillance du réseau extérieur ou à une mise hors service volontaire de l'appareil ménager.

2. Dispositif selon la revendication 1, **caractérisé en ce que** le premier moyen (3, 4, 8 ; 14, 15) est séparé du potentiel de la tension de réseau.

3. Dispositif selon la revendication 2, **caractérisé en ce que** le premier moyen (3, 4, 8 ; 14, 15) comprend un circuit avec au moins un optocoupleur (4), le circuit présentant côté entrée une diode d'émission et côté sortie une diode de réception ou un phototransistor.

4. Dispositif selon la revendication 3, **caractérisé en ce que** le courant de la diode d'émission de l'optocoupleur (4) peut être limité par un condensateur de réseau (3) ou une résistance ballast de puissance.

5. Dispositif selon la revendication 4, **caractérisé en ce que** le condensateur de réseau (3) est un condensateur d'un filtre antiparasitage.

6. Dispositif selon la revendication 2, **caractérisé en ce que** le premier moyen (3, 4, 8 ; 14, 15) comprend un relais (14) ou un transmetteur.

7. Dispositif selon l'une quelconque des revendications 3 à 5, **caractérisé en ce que** le signal de sortie de la diode de réception ou du phototransistor peut être numérisé par un convertisseur de niveau, en particulier par un trigger de Schmitt.

8. Dispositif selon l'une quelconque des revendications 1 à 7, **caractérisé en ce que** la tension détectable par le second moyen (7) est la tension générée par un bloc d'alimentation (9) interne à l'appareil.

9. Dispositif selon l'une quelconque des revendications 1 à 8, **caractérisé en ce que** le dispositif de commande de programme (5) contient un microcontrôleur (6) qui est relié au premier moyen (3, 4, 8 ; 14, 15) et au second moyen (7).

10. Dispositif selon la revendication 9, **caractérisé en ce que** le microcontrôleur (6) peut être réinitialisé par le bloc d'alimentation (9).

11. Dispositif selon la revendication 9 ou 10, **caractérisé en ce que** le microcontrôleur (6) présente des entrées (6.5) pour l'interrogation d'éléments de service (21) et de capteurs (22).

12. Dispositif selon l'une quelconque des revendications 9 à 11, **caractérisé en ce que** le microcontrôleur (6) présente des sorties pour la commande d'actionneurs (23) et d'affichages de service (24).

13. Dispositif selon l'une quelconque des revendications 9 à 12, **caractérisé en ce que** le microcontrôleur (6) contient une mémoire non volatile (6.4), en particulier un EEPROM.

14. Dispositif selon la revendication 13, **caractérisé en ce que** les données d'un état de programme atteint en cas de déroulement d'un programme peuvent être mémorisées de façon cyclique dans la mémoire (6.4).

15. Dispositif selon la revendication 14, **caractérisé en ce qu'**une réserve d'énergie pour l'alimentation électrique du microcontrôleur (6) est présente après une défaillance de réseau et **en ce que** les données d'un état de programme atteint en cas de déroulement d'un programme peuvent être mémorisées dans la mémoire (6.4) après la détection d'une défaillance de réseau.

16. Dispositif selon l'une quelconque des revendications 1 à 15, **caractérisé en ce qu'**un troisième moyen (13) attribué à un commutateur d'interruption (12) est présent pour la détection d'une interruption de programme volontaire et **en ce que** le dispositif de commande de programme (5) permet de différencier sur la base d'un signal généré par le troisième moyen (13) si la défaillance ou la variation de la grandeur électrique de l'appareil ménager est due à une mise hors service volontaire ou une interruption de programme volontaire, **en ce que** l'état de programme atteint lors de l'interruption de programme peut être mémorisé dans la mémoire (6.4) et **en ce que** le dispositif de commande de programme (5) peut demander la poursuite du déroulement de programme à partir de l'état de programme atteint après la fin de l'interruption de programme.
